# EUROPÄISCHE PATENTANMELDUNG

(11) **EP 0 932 243 A1**
(43) Veröffentlichungstag der Anmeldung: **28.07.1999**
(21) Anmeldenummer: 99810007.7
(22) Anmeldetag: 06.01.1999
(51) Int. Cl.: H02K 15/085

(54) **Vorrichtung zum Wickeln von Spulen in Axialnuten rotationssymmetrischer Körper von elektrischen Geräten**

(30) Priorität: 21.01.1998 CH 12998
(71) Anmelder: ATS Wickel- und Montagetechnik AG, 5436 Würenlos (CH)
(72) Erfinder: Kleinschrodt, Rudolf, 8955 Oetwil (CH); Rieser, Urs, 8964 Rudolfstetten (CH)
(74) Vertreter: Patentanwälte Breiter + Wiedmer AG

(57) **Zusammenfassung**

Bei einer Vorrichtung zum Wickeln von Spulen aus mindestens zwei parallel geführten Wickeldrähten (38a,b) in am Aussenumfang rotationssymmetrischer Körper (14) von elektrischen Geräten angeordnete Axialnuten (20) und Schlingen der Wickeldrähte (38a,b) um zwei voneinander beabstandete, stirnseitig am Körper (14) ringförmig angeordnete Kontakthaken (30) werden die Wickeldrähte (38a,b) von einem um eine senkrecht zur Rotationsachse (x) des Körpers (14) liegende Drehachse (y) bewegbaren Wickelarm (44) in die Nuten eingelegt. Am freien Ende des Wickelarmes (44) ist ein Drahtführer (50) mit für die beiden Wickeldrähte (38a,b) voneinander beabstandeten Drahtausgaben (54a,b) angeordnet. Der Drahtführer (50) ist zwischen einer Wickelposition, in der die Wickeldrähte (38a,b) zum Einlegen in die Nuten (20) einander im wesentlichen parallel anliegen, und einer Anlegeposition, in der die Wickeldrähte (38a,b) zum Umschlingen der Kontakthaken (30) auseinandergespreizt sind, drehbar.

## Beschreibung

Die Erfindung betrifft eine Vorrichtung zum Wickeln von Spulen aus mindestens zwei parallel geführten Wickeldrähten in am Aussenumfang rotationssymmetrischer Körper von elektrischen Geräten angeordnete Axialnuten und Schlingen der Wickeldrähte um zwei voneinander beabstandete, stirnseitig am Körper ringförmig angeordnete Kontakthaken, wobei die Wickeldrähte von einem um eine senkrecht zur Rotationsachse des Körpers liegende Drehachse bewegbaren Wickelarm in die Nuten eingelegt werden.

Zum Wickeln von Spulen bei Kollektorankern ist es bekannt, den Draht über rotierende Wickelarme in einander paarweise gegenüberliegende Axialnuten einzulegen. Sobald eine Spule vollständig gewickelt ist, wird der Anker zur Wicklung der nächsten Spule um seine Rotationsachse so gedreht, dass das die nächste Spule aufnehmende Nutenpaar mit dem Wickelarm in Wickelposition steht. Das Einführen des Drahtes durch die rotierenden Wickelarme erfolgt über sogenannte Wickelformen, die als Einlegehilfe für den in die Nuten einzulegenden Draht dienen. Eine derartige Vorrichtung ist beispielsweise in der EP-A-0 703 658 offenbart.

Bei Statoren von sogenannten Elektronikmotoren sind die einzelnen Spulen jeweils um einen Blechzahn des Stators gewickelt, d.h. der Draht einer Spulenwicklung ist in einander benachbarte Axialnuten eingelegt. Zur maschinellen Herstellung einer derartigen Wicklung wird in der europäischen Patentanmeldung 97810305.9 vorgeschlagen, dass der zu wickelnde Körper jeweils nach dem durch eine erste Schwenkbewegung des Wickelarmes um seine Drehachse erfolgten Einlegen des Drahtes in eine erste Nut um wenigstens eine Nutenteilung um seine Rotationsachse gedreht, der Draht durch eine der ersten Schwenkbewegungen entgegengesetzte zweite Schwenkbewegung in eine zweite Nut eingelegt und nach dem Einlegen in die zweite Nut zur Bildung einer Spulenwicklung durch eine weitere Drehung des Körpers an den Anfang der ersten Nut zurückgeführt wird. Durch diese Kombination einer Schwenkbewegung des Wickelarmes gefolgt von einer Drehung des Körpers ist es möglich, die Wicklungen einer Spule in einander direkt benachbarte Nuten einzulegen, d.h. die Spulen um einzelne, durch Nuten getrennte Zähne bzw. Stege zu wickeln. Obschon dieses Verfahren besonders zum Wickeln einer Spule um einen einzelnen Zahn geeignet ist, ist selbstverständlich auch das Bewickeln weiter auseinanderliegender Nutenpaare möglich.

Der Erfindung liegt die Aufgabe zugrunde, eine Vorrichtung der eingangs genannten Art zu schaffen, mit welcher auf einfache Weise Spulen aus mindestens zwei parallel geführten Wickeldrähten gewickelt und die Wickeldrähte im gleichen Arbeitsgang um jeweils zwei voneinander beabstandete Kontakthaken geschlungen werden können.

Zur erfindungsgemässen Lösung der Aufgabe führt, dass am freien Ende des Wickelarmes ein Drahtführer mit für die beiden Wickeldrähte voneinander beabstandeten Drahtausgaben angeordnet ist, wobei der Drahtführer zwischen einer Wickelposition, in der die Wickeldrähte zum Einlegen in die Nuten einander im wesentlichen parallel anliegen, und einer Anlegeposition, in der die Wickeldrähte zum Umschlingen der Kontakthaken auseinandergespreizt sind, drehbar ist.

Der Begriff "Wickeldraht" umfasst neben einem einzelnen Draht ggf. auch mehrere Drähte, die zur Bildung einer Mehrfachspule gleichtzeitig in die Nuten eingelegt werden.

Durch die erfindungsgemässe Drehbarkeit des Drahtführers kann der gegenseitige Abstand der beiden Wickeldrähte automatisch entsprechend der beim Wickeln und beim Anlegen an die Kontakthaken gewünschten Lage angepasst werden.

Grundsätzlich kann die erfindungsgemässe Vorrichtung irgendeinen Wickelarm, z.B. einen rotierenden Wickelarm aufweisen. Bevorzugt wird jedoch eine Wickelvorrichtung, bei welcher der Wickelarm Schwenkbewegungen um jeweils etwa 180° ausführt, wobei zwischen den Schwenkbewegungen der zu bewickelnde Körper um wenigstens eine Nutenteilung um seine Rotationsachse gedreht wird. Eine derartige Wickelvorrichtung ist in der vorstehend genannten europäischen Patentanmeldung 97810305.9 offenbart.

Bei einer bevorzugten Ausführungsform der erfindungsgemässen Vorrichtung ist der Drahtführer mit dem Wickelarm starr verbunden und der Wickelarm um seine Längsachse drehbar.

Zweckmässigerweise sind die Kontakthaken von einer Leithülse übergreifbar, wobei die Leithülse zwischen einer Wickelposition, in der die Wickeldrähte während des Wickelvorganges einer glatten Oberfläche der Leithülse zeitweilig anliegen, und einer Anlegeposition, in der die Wickeldrähte zum Anlegen an die Kontakthaken in an der Leithülse angeordnete Leitschlitze einführbar sind, drehbar ist. Hierbei entspricht der Abstand zwischen den Leitschlitzen im wesentlichen dem Abstand der zu umschlingenden Kontakthaken.

Bei einer weiter bevorzugten Ausführungsform der erfindungsgemässen Vorrichtung ist die Leithülse zur Durchführung der Umschlingung der Kontakthaken und zum Ausfahren der Wickeldrähte aus den Leitschlitzen von einer Abdeckhülse übergreifbar. Die Abdeckhülse kann zum Gespreizthalten der Wickeldrähte einen Leitfinger aufweisen.

Mit der erfindungsgemässen Vorrichtung lassen sich alle bekannten Rotoren und Statoren von elektrischen Motoren und Generatoren wickeln, bei denen die Wickelspulen in am Aussenumfang der Statoren bzw. Rotoren angeordneten Axialnuten eingelegt sind. Ein besonderer Anwendungsbereich betrifft das Anbringen von Spulen um einzelne oder mehrer Zähne bei Statoren von sogenannten Elektronikmotoren.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- Fig. 1: eine teilweise geschnittene Seitenansicht einer Wickelmaschine;
- Fig. 2: einen Querschnitt durch den Stator von Fig. 1;
- Fig. 3: eine Seitenansicht einer Leithülse;
- Fig. 4: eine teilweise geschnittene Seitenansicht auf einen Teil der Wickelmaschine von Fig. 1 mit aufgesetzter Abdeckhülse und gedrehtem Drahtführer.

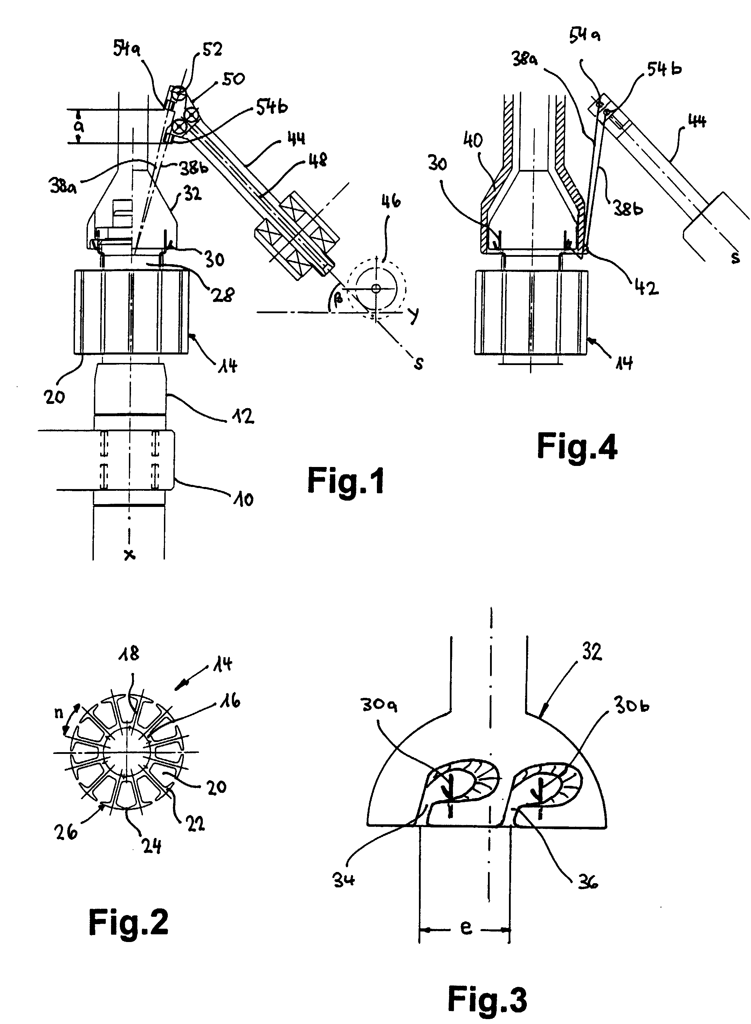

Eine in Fig. 1 dargestellte Wickelmaschine umfasst einen Schaltapparat 10 mit einem Spannwerkzeug für einen Stator 14. Der Stator 14 ist um seine Rotationsachse x, die der Spannachse des Schaltapparates 10 entspricht, drehbar eingespannt.

Der in Fig. 2 näher wiedergegebene Stator 12 besteht im wesentlichen aus einem rohrförmigen Körper 16 mit von diesem radial nach aussen abragenden Zähnen 18, die Axialnuten 20 als Schlitze zur Aufnahme einer Drahtwicklung bilden. Die einzelnen Zähne 18 des Stators 14 weisen ein querschnittlich etwa T-förmiges freies Ende 22 auf. Die freien Enden 22 der Zähne 18 bilden die durch Öffnungsschlitze 24 der Axialnuten 20 zur Drahteinführung unterbrochene äussere Oberfläche 26 des Stators 14.

Das Bewickeln des Stators 14 mit gleichzeitig zwei Wickeldrähten 38a, b erfolgt über einen Wickelarm 44, der in einem Winkel β zur Drehachse y auf der in der Zeichnung nicht dargestellten Achswelle einer Antriebseinheit angeordnet ist. Der Wickelarm 44 führt Schwenkbewegungen um einen Schwenkwinkel von etwas mehr als 180° aus, wobei während des Wickelns der Stator 14 zwischen jeweils zwei Schwenkbewegungen über den Schaltapparat 10 um eine Nutenteilung n gedreht wird.

Die Wickeldrähte 38a, b, die auch aus zwei Drahtbündeln zur Wicklung einer Mehrfachspule bestehen können, sind über einen am freien Ende des Wickelarmes 44 angeordneten Drahtführer 50 geführt. Die von einer Vorratsrolle 46 abgewickelten Wickeldrähte 38a, b werden über einen zentralen Drahtführungskanal 48 im Wickelarm 44 zum Drahtführer 50 und dort über Umlenkrollen 52 zu zwei voneinander in einem Abstand a angeordneten Drahtausgabeöffnungen 54a, b geführt.

Der Drahtführer 50 ist mit dem Wickelarm 44 starr verbunden. Der Wickelarm 44 und damit auch der Drahtführer 50 ist um die Längsachse s des Wickelarmes 44 drehbar. In der in Fig. 1 gezeigten Wickelposition des Drahtführers 50 liegen die Wickeldrähte 38a, b zum Einlegen in die Nuten 20 des Stators 14 einander im wesentlichen parallel an.

Am Stator 14 ist stirnseitig ein ringförmiger Isolierkörper 28 mit ringförmig angeordneten, der Anzahl Nuten 20 entsprechenden Kontakthaken 30 angeordnet. Die Kontakthaken 30 sind von einer in Fig. 3 näher dargestellten Leithülse 32 übergriffen. Diese Leithülse 32 ist einerseits mit einer glatten Oberfläche versehen und deckt die Kontakthaken 30 während des Wickelvorganges in dieser Wickelposition ab und ermöglicht so ein störungsfreies Einlegen der Wickeldrähte 38a, b in die Axialnuten 20 des Stators 14. Andererseits weist die Leithülse 32 zwei voneinander beabstandete Leitschlitze 34, 36 auf. Hierbei entspricht der Abstand e der beiden Leitschlitze 34, 36 im wesentlichen dem Abstand der beiden zu umschlingenden, im allgemeinen einander benachbarten Kontakthaken 30a, b.

Nach der Wicklung einer oder mehrerer Spulen um Zähne 18 des Stators 14 wird die Leithülse 32 so gedreht, dass die zu umschlingenden Kontakthaken 30a, b so zu den Leitschlitzen 34, 36 positioniert sind, dass in die Leitschlitze 34, 36 eingelegte Wickeldrähte 38a, b an die Kontakthaken 30a, b angelegt werden können. Nach erfolgtem Einlegen der Wickeldrähte 38a, b in die Leitschlitze 34, 36 in dieser Anlegeposition der Leithülse 32 wird diese derart gedreht, dass die Wickeldrähte 38a, b über die Kontakthaken 30a, b geführt werden.

Damit die Wickeldrähte 38a, b in die Leitschlitze 34, 36 eingeführt werden können, müssen die Wickeldrähte vorgängig gespreizt werden. Dies erfolgt durch eine vorgängige Drehung des Drahtführers 50 in die in Fig. 4 gezeigte Position.

Die vollständige Umschlingung der Kontakthaken 30a, b erfolgt mittels einer die Leithülse 32 zeitweilig übergreifenden Abdeckhülse 40, mit welcher die Wickeldrähte 38a, b auch wieder aus den Leitschlitzen 34, 36 der Leithülse 32 herausgeführt werden. Zum Gespreizthalten der Wickeldrähte 38a, b während des Umschlingungsvorganges ist die Abdeckhülse 40 mit einem zwischen die Wickeldrähte 38a, b greifenden Leitfinger 42 versehen.

Bei der in der Zeichnung dargestellten Ausführungsform ist nur ein Wickelarm vorgesehen. Die vorliegende Erfindung schliesst aber Anordnungen mit mehr als einem Wickelarm nicht aus. Ebenso ist die vorliegende Erfindung nicht auf Schwenkbewegungen ausführende Wickelarme beschränkt.

## Patentansprüche

1. Vorrichtung zum Wickeln von Spulen aus mindestens zwei parallel geführten Wickeldrähten (38a,b) in am Aussenumfang rotationssymmetrischer Körper (14) von elektrischen Geräten angeordnete Axialnuten (20) und Schlingen der Wickeldrähte (38a,b) um zwei voneinander beabstandete, stirnseitig am Körper (14) ringförmig angeordnete Kontakthaken (30), wobei die Wickeldrähte (38a,b) von einem um eine senkrecht zur Rotationsachse (x) des Körpers (14) liegende Drehachse 01) bewegbaren Wickelarm (44) in die Nuten eingelegt werden,
dadurch gekennzeichnet, dass
am freien Ende des Wickelarmes (44) ein Drahtführer (50) mit für die beiden Wickeldrähte (38a,b) voneinander beabstandeten Drahtausgaben (54a,b) angeordnet ist, wobei der Drahtführer (50) zwischen einer Wickelposition, in der die Wickeldrähte (38a,b) zum Einlegen in die Nuten (20) einander im wesentlichen parallel anliegen, und einer Anlegeposition, in der die Wickeldrähte (38a,b) zum Umschlingen der Kontakthaken (30a,b) auseinandergespreizt sind, drehbar ist.

2. Vorrichtung nach Anspruch 1, dadurch gekennzeichnet, dass der Drahtführer (50) mit dem Wickelarm (44) starr verbunden und der Wickelarm (44) um seine Längsachse (s) drehbar ist.

3. Vorrichtung nach Anspruch 1 oder 2, dadurch gekennzeichnet, dass die Kontakhaken (30) von einer Leithülse (32) übergreifbar sind, wobei die Leithülse (32) zwischen einer Wickelposition, in der die Wickeldrähte (38a,b) während des Wickelvorganges einer glatten Oberfläche der Leithülse (32) zeitweilig anliegen, und einer Anlegeposition, in der die Wickeldrähte (38a,b) zum Anlegen an die Kontakthaken (30a,b) in an der Leithülse (32) angeordnete Leitschlitze (34,36) einführbar sind, drehbar ist.

4. Vorrichtung nach Anspruch 3, dadurch gekennzeichnet, dass der Abstand (e) zwischen den Leitschlitzen (34,36) im wesentlichen dem Abstand der zu umschlingenden Kontakthaken (30a,b) entspricht.

5. Vorrichtung nach Anspruch 3 oder 4, dadurch gekennzeichnet, dass die Leithülse (32) zur Durchführung der Umschlingung der Kontakthaken (30a,b) und zum Ausfahren der Wickeldrähte (38a,b) aus den Leitschlitzen (34,36) von einer Abdeckhülse (40) übergreifbar ist.

6. Vorrichtung nach Anspruch 5, dadurch gekennzeichnet, dass die Abdeckhülse (40) einen Leitfinger (42) zum Gespreizthalten der Wickeldrähte (38a,b) aufweist.

7. Verwendung der Vorrichtung nach einem der Ansprüche 1 bis 6 zum Wickeln von Spulen um einzelne oder mehrere Zähne von Statoren von Elektronikmotoren.
